# EUROPÄISCHE PATENTSCHRIFT

(11) **EP 1 584 668 B1**
(45) Veröffentlichungstag und Bekanntmachung des Hinweises auf die Patenterteilung: **06.06.2007**
(21) Anmeldenummer: 05013650.6
(22) Anmeldetag: 27.03.1998
(51) Int. Cl.: C09F 9/00

(54) **Verwendung spezieller Vanadiumverbindungen als Sikkative für oxidativ trocknende Lacke**
Use of special vanadium compounds as driers for oxidatively drying paints
Utilisation de composés spéciaux du vanadium comme siccatifs pour peintures séchant par oxydation

(30) Priorität: 10.04.1997 DE 19714825
(43) Veröffentlichungstag der Anmeldung: 12.10.2005
(62) Teilanmeldung aus: 98105598.1
(73) Patentinhaber: Borchers GmbH, 40764 Langenfeld (DE)
(72) Erfinder: Link, Günter, 38644 Goslar (DE); Edelmann, Dirk, Dr., 42477 Radevormwald (DE); Stumpp, Eberhard, Prof.-Dr., 38678 Clausthal (DE)
(74) Vertreter: Pettrich, Klaus-Günter

(56) Entgegenhaltungen:
- EP-A- 0 304 149
- DE-A- 4 236 697
- GB-A- 1 004 171
- GB-A- 2 172 598

## Beschreibung

Die Erfindung betrifft die Verwendung spezieller Vanadiumverbindungen als Sikkative für oxidativ trocknende Lacke. Diese Trockenstoffe (Sikkative) sind ionogener Natur und enthalten mehrwertige Kationen des Vanadiums bzw. des Vanadiumoxids und anionische organische Säurereste oder andere organische Anionen.

Im Sinne der Erfindung sind Trockenstoffe ionogene Metallverbindungen, die ungesättigten Ölen und Bindemitteln (oxidativ trocknender Bestandteil in Lacken) zugesetzt werden, um deren Trockenzeit, d.h. den Übergang ihrer Filme von der flüssigen in die feste Phase, erheblich zu verkürzen. Dieser Übergang erfolgt durch oxidative Vernetzung, die durch metallische Kationen oder Kationoxiden der ionogenen Metallverbindung beschleunigt wird.

Trockenstoffe können in fester und gelöster Form vorliegen. In gelöster Form bezeichnet man Trockenstoffe auch als Sikkative.

Herkömmliche Trockenstoffe sind Metallseifen von Isooctansäure, Naphthensäure, Linolfettsäure, Ricinenfettsäure oder Tallölfettsäure, die durch direkte Umsetzung von Metallen und Carbonsäuren oder nach dem Fällungs- und Schmelzprozeß aus den Carbonsäuren und den Metalloxiden oder -hydroxiden hergestellt werden. Eine Aufstellung der gebräuchlichen Trockenstofftypen und Kombinationen und Herstellungsverfahren befindet sich z.B. in Lehrbuch der Lacke und Beschichtungen, Band III, 1976, Seite 296 bis 476 oder Ullmann, Encyclopädie der Chemie, Band 23, Seite 421 bis 424, 1979.

Die herkömmlichen Trockenstoffe sind in organischen Lösemitteln lösbar, so daß sie gute Trocknungseigenschaften in oxidativ trocknenden Lacken entfalten, die ausschließlich organische Lösemittel enthalten. So werden Trockenstoffe nach dem Stand der Technik in zumeist flüchtigen organischen Lösemitteln gelöst bzw. direkt in organischen Lösemitteln hergestellt. Bekannt sind z.B. Trockenstoffe, die wasserlöslich sind bzw. als wasserverdünnbare Emulsion vorliegen. Als Beispiel solcher Trockenstoffe mögen die in der Patentanmeldung DE-A-4 236 697 genannten Verbindungen dienen.

Neben der Art der Liganden und der Art des Lösemittels von Trockenstoffen werden diese auch nach ihren trocknungskatalytischen Eigenschaften unterschieden. Dabei bezeichnet man Trockenstoffe, die alleine die autoxidative Vernetzung katalysieren als sog. Primärtrockner, alle anderen Trockenstoffe, die nur zusammen mit den Erstgenannten eingesetzt werden, als sog. Sekundärtrockner.

Unabhängig von der Art der Lösemittel und der sich am Metallkation befindlichen Liganden (bzw. Anionen) werden als Metalle vorrangig genannt: Kobalt, Blei, Mangan, Eisen, Nickel, Wismut, Cer, Titan, Wismut.

Seit einiger zeit ist man intensiv bestrebt, die Anteile von bei Raumtemperatur flüchtigen organischen Lösemitteln in den verschiedenen Lacksystemen, auch in oxidativ trocknenden Lacken und somit auch in den ihnen zugesetzten Sikkativen zu minimieren. Dies geschieht vor allem aus ökologischen und toxischen Gesichtspunkten, aber auch unter Sicherheitsaspekten bei der Herstellung und Applikation der entsprechenden Lacke.

Eine Möglichkeit, diesen Anforderungen gerecht zu werden, ist der Einsatz von Wasser als Lösemittel in oxidativ trocknenden Lacksystemen.

Diese Systeme zeichnen sich in Bezug auf die Zugabe von herkömmlichen Sikkativen durch eine Reihe von Nachteilen aus. So sind herkömmliche Trockenstoffe wie z.B. Oktoate in Wasser praktisch nicht löslich. Werden sie in Form z.B. einer Emulsion zu dem Bindemittel gegeben, so findet vielfach eine Hydrolyse der Sikkative statt, deren Reaktionsprodukte unlöslich sind und sich absetzten. Außerdem führt die Hydrolyse zu einem erheblichen Verlust an Trockenkraft und zu einer unzureichenden Lagerstabilität der Lackansätze. Eine Zusammenfassung dieser Phänomene findet sich z.B. in "Handbook of Coating Additives, Marcel Decker, New York, Basel, 1988, Seiten 501-505.

Deshalb wurden in der jüngsten Zeit in Wasser emulgierbare, vorkomplexierte Trockenstoffe vorgeschlagen, die durch die Art der Liganden gegenüber Hydrolyse unempfindlich sein sollten. Derartige Verbindungen sind z.B. in dem Vortrag "Neue Additive in Wasserlacken" von J.H. Bielemann (22.9.1992 in Nürnberg) genannt worden. Diese weisen wiederum den Nachteil auf, daß sie nur sehr schwierig in den Lack eingearbeitet werden können. Außerdem neigen sie zu Weckselwirkungen mit in den Lacken möglicherweise vorhandenen Aminen, wodurch es zu Absatzerscheinungen kommt und dadurch oftmals zu einer mangelhaften Durchtrocknung der entsprechenden Lackfilme. Zusätzlich wird der Glanz solcher Lackfilme durch den Emulgator des Trockenstoffes herabgesetzt.

Eine Möglichkeit, diese Probleme zu beheben, ist in der DE-A-4 236 697 genannt. Dort werden Metallseifen beschrieben, deren organische anionische Reste vorzugsweise aus Polyoxycarbonsäuren bestehen. Diese Trockenstoffe bauen vorzugsweise auf Metallkationen des Kobalts, Bleis und Zirkoniums auf.

Vanadiumverbindungen, insbesondere Vanadiumpentoxid und Vanadiumlinoleat sind als Härtungsbeschleuniger für autoxidativ trocknende Öle beschrieben worden (R.Swethen, Farbenzeitung 32 (1927), Seiten 1138-1139).

In einer anderen Untersuchung sind diese Ergebnisse allerdings nicht bestätigt worden (F.Hebler, Farbenzeitung 32 (1927), Seiten 2077-2078). Die dort beschriebenen Vanadiumsikkative wurden ebenfalls in Ölen getestet. Gemeinsames Resultat beider Veröffentlichungen war die starke Verfärbung der entsprechenden Lacke sowie eine unzureichende Lagerstabilität von mit den dort beschriebenen Vanadiumsikkativen versetzten Lacken. Außerdem bleibt festzuhalten, daß die genaue chemische Natur der Trockenstoffe nicht beschrieben worden ist.

Aufgabe der vorliegenden Erfindung war es somit, neue Trockenstoffe für oxidativ trocknende Lacke bereitzustellen, die für Systeme geeignet sind, die Wasser als Lösemittel enthalten. Demnach sollten diese Trockenstoffe in Wasser löslich bzw. problemlos einarbeitbar sein, so daß keine zusätzlichen Emulgatoren notwendig sind. Die erfindungsgemäßen Trockenstoffe sollten des weiteren in Wasser keine nachteiligen Hydrolyseprodukte bilden und bessere Filmqualitäten von Wasser enthaltenden Lacken ermöglichen als die nach dem Stand der Technik bekannten Trockenstoffe.

Gegenstand der Erfindung ist die Verwendung von Vanadylsalzen als Sikkative in oxidativ trocknenden Lacken, die 10 bis 80 Gew.-% Wasser, wobei Vanadylphosphate der Formel (IV) und (V) 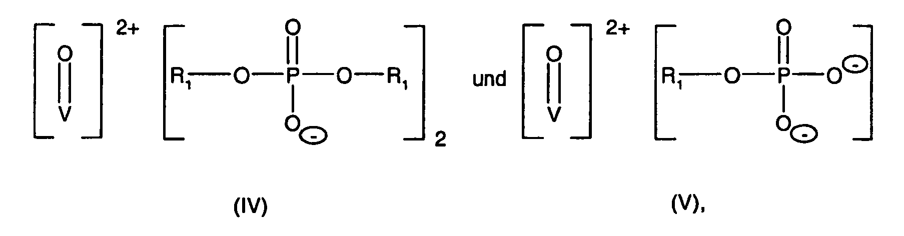 in welchen
- R₁: einen verzweigten oder linearen C₁-C₆-aliphatischen Rest bedeutet,
eingesetzt werden.

Verbindungen der allgemeinen Formel (IV) und (V) können als Lösung in Wasser oder als Lösung in Butanol bzw. ähnlichen Lösemitteln vorliegen. Vanadylphosphate der Formeln (IV) und (V) können bekanntlich als oligomere oder polymere Substanzen vorliegen.

Im Sinne der Erfindung besonders bevorzugt sind Vanadyl-Verbindungen der Formeln (IV) und (V) mit R₁ = n-Butylrest, als Lösung in n-Butanol.

Die Herstellung der in den allgemeinen Formeln (IV) bis (V) beschriebenen Verbindungen kann nach den in der Literatur bekannten Verfahren zur Darstellung von Phosphorsäureestern (Formel (IV) und (V)) erfolgen.

Ein weiterer Gegenstand der vorliegenden Erfindung ist die Anwendung der oben beschriebenen Sikkativformulierungen als Härtungsbeschleuniger für wasserverdünnbare oxidativ trocknende Lacke.

Für die Anwendung können die erfindungsgemäßen Sikkativ-Zubereitungen sowohl alleine als auch in beliebiger Abmischung miteinander verwendet werden. Es ist auch im Sinne der Erfindung, die erfindungsgemäßen Sikkative mit herkömmlichen Trockenstoffen, die in wasserverdünnbaren, oxidativ trocknenden Bindemitteln bzw. Lacken einsetzbar sind, abzumischen bzw. zusammen in einem entsprechenden Lacksystem einzusetzen.

Die erfindungsgemäßen Trockenstoffe bzw. Sikkative können erfindungsgemäß in reiner Form oder als - wie oben beschrieben - wäßrige Lösungen eingesetzt werden.

Die Einsatzmenge der Trockenstoffe bzw. der Sikkative richtet sich nach dem ungestättigten Charakter der Bindemittel und nach der Art der eingesetzten Bindemittel in den Lacken. Weitere Faktoren, die die Einsatzmenge beeinflussen, sind z.B. Pigmente und Art sowie Menge von Antioxidationsmitteln und weitere Additive wie z.B. Netzmittel.

Die neuen Sikkative können jedem wasserverdünnbaren, autoxidativ trocknenden Lack bzw. Bindemittel zugegeben werden.

## Patentansprüche

1. Verwendung von Vanadylsalzen als Sikkative in oxidativ trocknenden Lacken, die 10 bis 80 Gew.-% Wasser enthalten, **dadurch gekennzeichnet, dass** Vanadyl-Verbindungen der Formeln (IV) und (V) 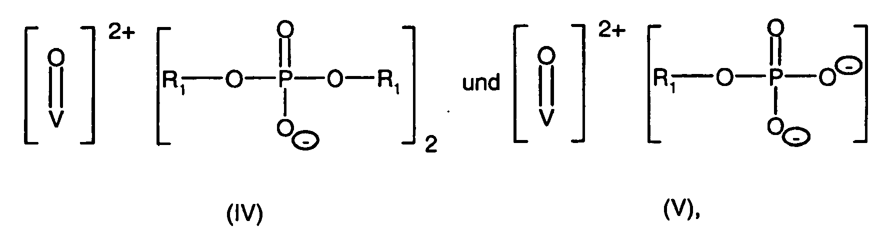 in welchen
R₁ einen verzweigten oder linearen aliphatischen Rest von C₁-C₆ bedeutet,
eingesetzt werden.

## Claims

1. Use of vanadyl salts as siccatives in oxidatively drying coating materials containing 10% to 80% by weight of water, **characterized in that** vanadyl compounds of the formulae (IV) and (V) 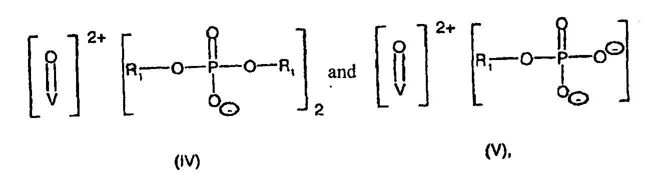 in which
R¹ is a branched or linear C₁-C₆ aliphatic radical
are used.

## Revendications

1. Utilisation de sels de vanadyle en tant que siccatifs dans des revêtements séchant par oxydation, qui renferment de 10 à 80 % en poids d'eau, **caractérisée en ce que** l'on utilise des composés vanadyle de formules (IV) et (V) 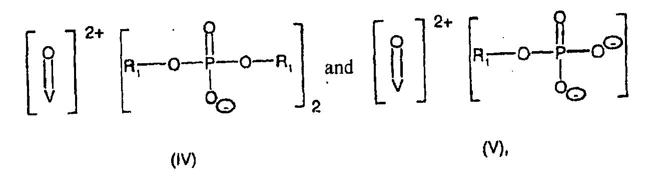 and = et
dans lesquelles
R₁ représente un radical aliphatique ramifié ou linéaire en C₁-C₆.
